# EUROPÄISCHE PATENTSCHRIFT

(11) **EP 0 517 652 B1**
(45) Veröffentlichungstag und Bekanntmachung des Hinweises auf die Patenterteilung: **12.04.1995**
(21) Anmeldenummer: 92810367.0
(22) Anmeldetag: 15.05.1992
(51) Int. Cl.: B23Q 3/155, B23Q 7/10

(54) **Werkzeug- und/oder Werkstückmagazin**
Tools and/or workpieces magazine
Magasin d'outils et/ou de pièces

(30) Priorität: 03.06.1991 DE 4118074
(43) Veröffentlichungstag der Anmeldung: 09.12.1992
(73) Patentinhaber: Erowa AG, CH-5734 Reinach (CH)
(72) Erfinder: Obrist, Basil, CH-5728 Gontenschwil (CH)
(74) Vertreter: Rottmann, Maximilian R.

(56) Entgegenhaltungen:
- DE-A- 3 519 545
- US-A- 4 654 957
- PATENT ABSTRACTS OF JAPAN vol. 8, no. 276 (M-346)(1713) 18. Dezember 1984

## Beschreibung

Für den mannlosen, zeitlich ausgedehnten Betrieb einer Fertigungsanlage ist unter Umständen, insbesondere bei schnell wechselnden Fertigungsaufgaben eine grosse Zahl von Werkstücken und Werkzeugen bereitzustellen, wozu verhältnismässig grosse Magazinräume und entsprechend weiträumig arbeitende Handhabungsgeräte zur Verfügung stehen müssen. Zur Bedienung einer oder mehrerer Bearbeitungsmaschinen sind für diesen Fall oft mehrere Mehrebenen-Rundtaktspeicher und z.B. ein Portalroboter als Handhabungsgerät erforderlich, wie beispielsweise aus dem Aufsatz "Möglichkeiten und Trends bei der automatischen Werkstückhandhabung mit Industrierobotern" in der Zeitschrift "wt-Z.ind.Fertig. 76(1986)Nr.10, S. 585-589 (Springer-Verlag)" hervorgeht. Der Materialaufwand und der Platzbedarf für die in einem solchen Umfang erforderlichen Hilfseinrichtungen sind erfahrungsgemäss beträchtlich. Ferner dauert der Betriebsunterbruch für die am Magazinstandort vorgenommene Erneuerung der Magazinobjekte dem Umfang des Magazinraumes entsprechend lang.

Die Erfindung betrifft demgegenüber ein Magazin für Werkzeuge und/oder Werkstücke, welches mit festem Standort in einer flexiblen Fertigungsanlage für die Zusammenarbeit mit wenigstens einer Bearbeitungseinrichtung und einem dieser zugeorneten Handhabungsgerät für den automatischen Werkzeug- bzw. Werkstückwechsel in der Bearbeitungseinrichtung bestimmt ist und welches ein Drehregal mit mehreren, an einer Säule übereinander angeordneten Lagerebenen aufweist, wobei das Drehregal als separate Baueinheit ausgebildet und austauschbar in den stationären, die Mittel zum Betrieb des Drehregals enthaltenden Teil des Magazins eingesetzt ist.

Auf diese Weise ist es möglich, an der Magazinstation ein kleineres Speichervolumen und für die Bedienung der Bearbeitungsmaschinen ein einfacheres Handhabungsgerät vorzusehen. Dadurch lässt sich auch die Zugriffszeit zum Magazin verkürzen. Das auswechselbare Drehregal kann periodisch bzw. nach Bedarf durch ein solches mit neuen Werkstücken bzw. Werkzeugen ersetzt und ausserhalb der Magazinstation entladen und neu beladen werden. Dabei kann dieser Austausch ohne Unterbrechung des laufenden Fabrikationsvorgangs stattfinden.

In der Patentschrift JP-A-59 146 227 ist ein Magazin dieser Art beschrieben. Dieses Magazin ist dafür eingerichtet, mehrere transportable Drehregale aufzunehmen und diese einzeln in den Zugriffsbereich eines dem Magazin zugeordneten Handhabungsgerätes zu bringen. Zu diesem Zweck weist das Magazin eine drehbare Tragvorrichtung mit mehreren Tragarmen auf, an deren freien Enden je ein mit einem Auflageteller versehenes Drehregal absetzbar ist. Den stationären Teil des Magazins bildet ein Sockel, in dem eine Antriebsvorrichtung zum Drehen der Tragvorrichtung untergebracht ist. Mit deren Hilfe lässt sich jeweils ein Tragarm in eine Betriebsposition bringen, in der ein darauf abgesetztes Drehregal am unteren Ende seiner Säule mit einem ebenfalls im Sockel untergebrachten Antriebsmotor kuppelbar ist, um dieses Drehregal zu drehen und die darauf plazierten Werkzeuge wahlweise in eine Entnahmeposition zu bringen. Ferner ist mit dem Antriebsmotor eine Hubvorrichtung verbunden, die dazu dient, das angekuppelte Drehregal für den Positioniervorgang vom Tragarm abzuheben.

Magazine mit einem Drehregal, das an beiden Enden der drehbaren Säule in einem Gestell gelagert ist, sind an sich bekannt, beispielsweise aus den Patentschriften EP 0132599 A1 und EP 0297034 A2. Das Drehregal ist jedoch bei diesen Magazinen nicht austauschbar.

Der Erfindung liegt die Aufgabe zugrunde, das Magazin der gattungsgemässen Art unter Vermeidung der beschriebenen Nachteile zu verbessern.

Die Erfindung löst die genannte Aufgabe dadurch, dass der stationäre Teil des Magazins ein Gestell aufweist, an dem lösbare, mit den beiden Enden der drehbaren Säule des Drehregals zusammenarbeitende Kupplungsmittel für die Lagerung und den Antrieb des Drehregals angebracht sind, dass die drehbare Säule des Drehregals an ihrem unteren Ende einen Fussteller mit einer nach unten offenen Zentriermuffe und an ihrem oberen Ende einen Zentrierkonus aufweist, dass sich im unteren Teil des Gestells ein angetriebener, mit einem nach oben gerichteten Zentrierzapfen versehener Drehschemel befindet, auf den das Drehregal aufgesetzt ist, wobei der Fussteller des Drehregals auf dem Drehschemel ruht und dessen Zentrierzapfen in die Zentriermuffe des Fusstellers eingreift, dass an der Oberseite des Gestells ein Wellenstumpf mit einer nach unten offenen konischen Zentrierbohrung für die Aufnahme des Zentrierkonus der Säule frei drehbar gelagert ist, dass der Drehschemel samt Drehantrieb, an einem Hubtisch gelagert ist, welcher das eingesetzte Drehregal unter Krafteinwirkung nach oben drückt, so dass dessen Säule zwischen dem Drehschemel und dem Wellenstumpf formschlüssig und positionsgerecht gehalten und der Fussteller mit dem Drehschemel reibschlüssig verbunden ist, und dass am stationären Teil des Magazins eine Fördereinrichtung mit horizontaler Förderbahn für den Austausch des Drehregals vorgesehen ist, wobei das Drehregal aus der Betriebslage mit dem Fussteller auf die Förderbahn absenkbar ist und die Kupplungsmittel beim Lösen vom Drehregal dieses für eine Bewegung in Förderrichtung freigeben.

Die Fördereinrichtung erleichtert den Austausch des Drehregals, d.h. die Entnahme des im Einsatz befindlichen Drehregals aus der Magazinstation und dessen Ersatz durch den Einsatz eines anderen, neu bestückten Drehregals.

Die Mittel für die Umsetzung des Drehregals aus der Betriebslage in die Transportlage sind beispielsweise so gestaltet, dass der Hubtisch aus der Betriebslage so weit absenkbar ist, dass der Zentrierzapfen am Drehschemel nach dem Aufsetzen des Drehregals auf die Fördereinrichtung mit der Zentriermuffe am unteren Säulenende ausser Eingriff kommt, und dass der Wellenstumpf nach oben wegziehbar ist, um den Zentrierkonus am oberen Säulenende mit der Zentriebohrung am Wellenstumpf ausser Eingriff zu bringen, so dass die Lösung des Drehregals von den Kupplungsmitteln in zwei Phasen erfolgen kann, wobei in der ersten Phase das Drehregal unter Fortwirkung der oberen Kupplungsmittel mit seinem Fussteller auf die Fördereinrichtung aufgesetzt wird und die unteren Kupplungsmittel gelöst werden und in der anschliessenden zweiten Phase die oberen Kupplungsmittel vom Drehregal gelöst werden.

Das Beladen bzw. Umladen eines dem Magazin entnommenen Drehregals kann an irgend einem geeigneten Platz, z.B. unmittelbar neben der Magazinstation oder aber an einem dafür eigens vorgesehen Platz vorgenommen werden. In an sich bekannter Weise können auch eine von der Magazinstation entfernte Umladestation zum Beladen und Entladen von Drehregalen sowie Transportmittel für den Transport der Drehregale von der Umladestation zur Magazinstation und umgekehrt vorhanden sein.

Als Fördereinrichtung kann ein Rollenförderer mit gemeinsam angetriebenen Rollen vorgesehen sein. Zweckmässigerweise sind ferner längs der Förderbahn am Umfang des Fusstellers wirksame Führungsorgane für die Längsführung des Drehregals sowie am Ende der Förderbahn ein Endanschlag zum Stillsetzen eines einfahrenden Drehregals im Zentrierbereich vorhanden.

In der Zeichnung ist ein Ausführungsbeispiel der Erfindung dargestellt, und zwar zeigen:
- Fig. 1: Frontansicht des Magazins mit austauschbarem Drehregal;
- Fig. 2: Seitenansicht des Magazins;
- Fig. 3: Grundriss des Magazins;
- Fig. 4: Seitenansicht des austauschbaren, als separate Baueinheit ausgebildeten Drehregals;
- Fig. 5: Frontansicht nach Fig. 1, mit auf die Fördereinrichtung abgesenktem und von den Kupplungsmitteln freigegebenem Drehregal;
- Fig. 6: Schnittansicht der unteren Kupplungsmittel in grösserem Massstab, im Betriebszustand;
- Fig. 7: Schnittansicht gemäss Fig. 6, Kupplungsmittel im gelösten Zustand;
- Fig. 8: Schnittansicht der oberen Kupplungsmittel in grösserem Massstab, im Betriebszustand;
- Fig. 9: Schnittansicht gemäss Fig. 8, Kupplungsmittel im gelösten Zustand;
- Fig. 10: Schematische Darstellung einer einfachen Fabrikationsanlage, mit einer Bearbeitungseinrichtung, einem Handhabungsgerät für den automatischen Werkzeug- und/oder Werkzeugwechsel und einem erfindungsgemässen Magazin für die Handhabungsobjekte.

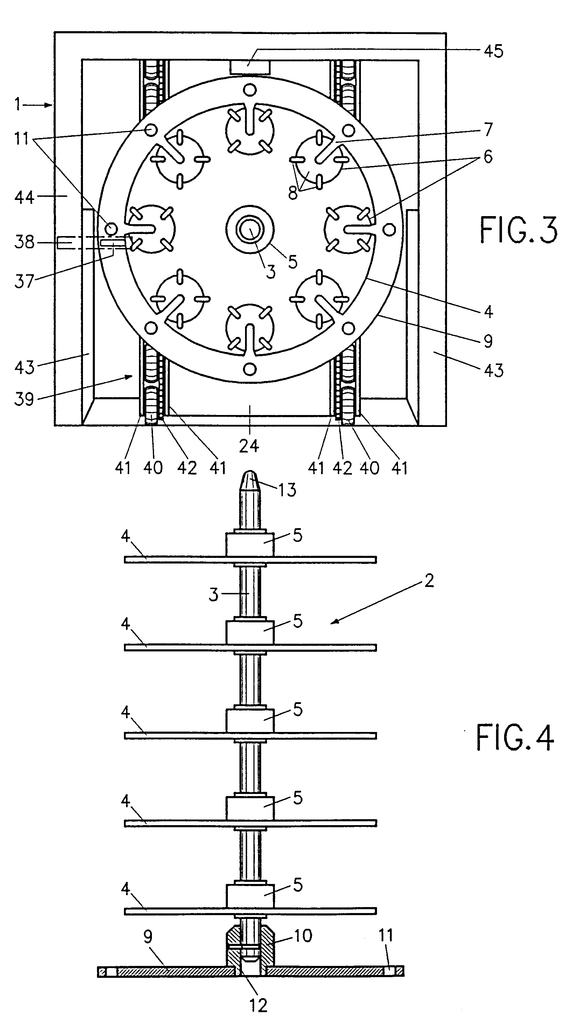

Das als Ausführungsbeispiel gewählte Magazin mit austauschbarem Drehregal besitzt ein gesamthaft mit 1 bezeichnetes, aus Vierkantrohren aufgebautes Gestell, welches einen quadratischen Grundriss und eine dem in Fig. 4 separat dargestellten Drehregal 2 entsprechende Höhe aufweist und welches den stationären, die Mittel zum Betrieb des Drehregals enthaltenden Teil des Magazins trägt. Die einzelnen Teile dieses Gestells 1 werden im Verlauf der Beschreibung nach Bedarf näher bezeichnet.

Gemäss Fig. 4 besteht das gesamthaft mit 2 bezeichnete Drehregal in an sich bekannter Weise im wesentlichen aus einer drehbaren Säule 3, an welcher z.B. fünf Träger 4 für die zu handhabenden Objekte (Werkstücke und/oder Werkzeuge) in Form von runden Scheiben in mehreren Ebenen mit gleichmässigen Höhenabständen befestigt sind. Die Objektträger 4 sind zu diesem Zweck mit je einer Habe 5 versehen, welche in nicht näher dargestellter Weise, z.B. durch Verstiftung, an der Säule 3 verankert ist. Gemäss Fig. 3 verfügt jeder Objektträger 4 an seinem Umfang über eine Anzahl (z.B. acht) unter sich gleich ausgebildeter Lagerplätze 6, welche beispielsweise durch einen radialen Einschnitt 7 und achsiale Vertiefungen 8 für eine positionsgerechte Plazierung von Objekten mit einheitlicher Halterung gekennzeichnet sind.

Die drehbare Säule 3 des Drehregals 2 weist an ihrem unteren Ende einen Fussteller 9 auf, welcher in ähnlicher Weise wie die Objektträger 4 mit einer Nabe 10 an der Säule 3 verankert sein kann. Dieser Fussteller 9 hat einen etwas grösseren Durchmesser als die Objektträger 4 und ist nahe seines Umfangs mit einer Anzahl (z.B. acht) Rastlöchern 11 versehen, welche zur Positionierung des Drehregals 2 in verschiedenen Drehlagen dienen. Die am unteren Ende der Säule 3 befindliche Nabe 10 bildet zugleich eine nach unten offene Zentriermuffe 12, und an ihrem oberen Ende weist die Säule 3 einen Zentrierkonus 13 auf.

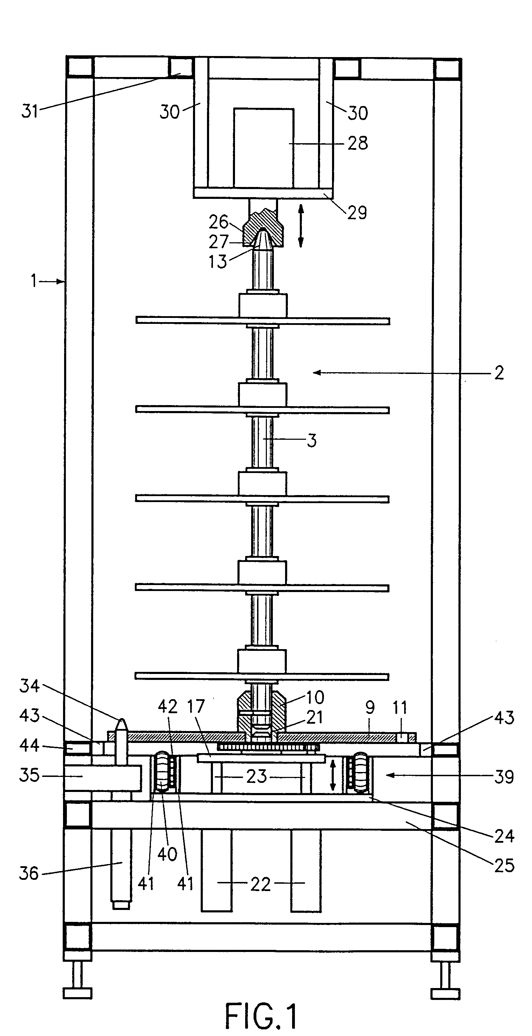

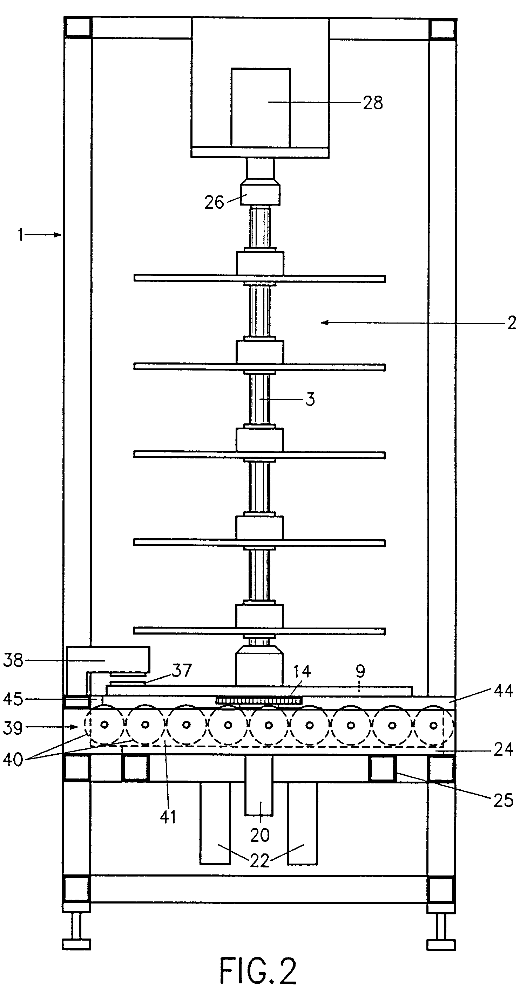

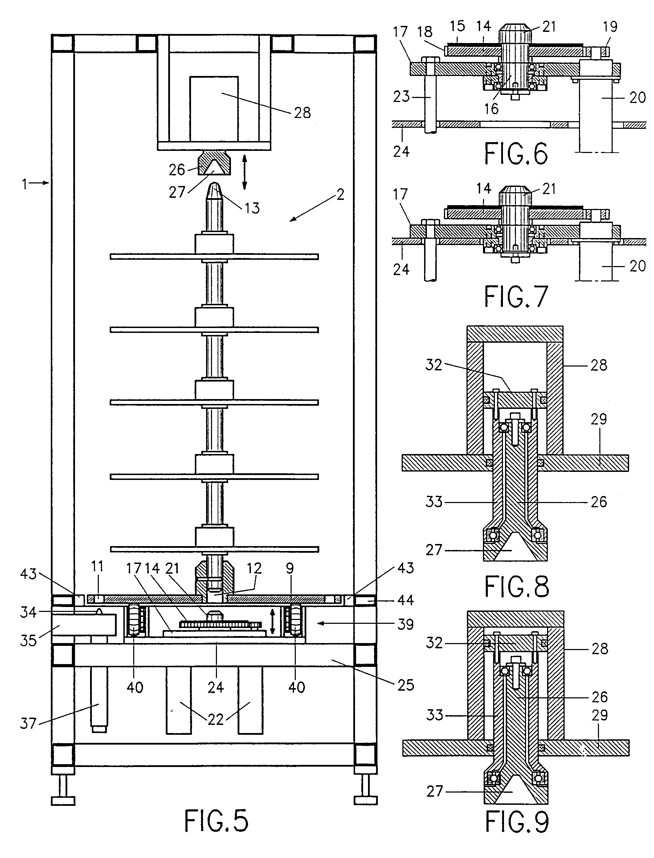

Für die Lagerung und den Antrieb des Drehregals 2 sind am Gestell 1 montierte Kupplungsmittel vorgesehen, welche mit den in der beschriebenen Weise ausgebildeten Enden der Säule 3 zusammenarbeiten. Im unteren Teil des Gestells 1 befindet sich ein Drehschemel 14, auf dem das Drehregal 2 in der Betriebslage mit seinem Fussteller 9 gemäss den Fig. 1 und 2 aufliegt. Einzelheiten dieses Drehschemels 14 gehen aus den Fig. 6 und 7 hervor. Zur reibschlüssigen Verbindung zwischen Drehregal 2 und Drehschemel 14 ist auf den letzteren ein Reibbelag 15 aufgebracht. Der Drehschemel 14 sitzt auf einer Welle 16 und ist mit dieser an einem Hubtisch 17 in der dargestellten Weise drehbar gelagert. Zum Antrieb des Drehschemels 14 ist dieser an seinem Umfang mit einer Verzahnung 18 versehen, in welche ein Ritzel 19 eines elektrischen Antriebsmotors 20 eingreift, der am Hubtisch 17 befestigt ist. Das obere Ende der Welle 16 bildet einen nach oben ragenden Zentrierzapfen 21, welcher in die Zentriermuffe 12 am Fussteller 9 des aufgesetzten Drehregals 2 eingreift (Fig. 1). Für die Höhenverstellung des Hubtisches 17 sind vier Arbeitszylinder 22 vorgesehen, welche mit einem Druckmedium beaufschlagbar sind und deren Kolbenstangen 23 mit dem Hubtisch 17 verbunden sind. Die Arbeitszylinder 22 sind an der Unterseite einer Grundplatte 24 montiert, welche ihrerseits auf einem Rahmenteil 25 des Gestells 1 ruht.

Die oberen Kupplungsmittel bestehen gemäss Fig. 1 aus einem drehbaren und vertikal verschiebbaren Wellenstumpf 26, welcher mit einer nach unten offenen konischen Zentrierbohrung 27 zur Aufnahme des Zentrierkonus 13 der Säule 3 des Drehregals 2 versehen ist. Der Wellenstumpf 26 ist in einem Antriebsblock 28 gelagert, welcher auf einer Plattform 29 ruht, die ihrerseits mit Stützplatten 30 an einem oberen Rahmenteil 31 des Gestells 1 verankert ist. Wie aus den Fig. 8 und 9 im einzelnen hervorgeht, handelt es sich bei dem Antriebsblock 28 um einen schematisch dargestellten Arbeitszylinder mit einem druckbeaufschlagten Kolben 32, wobei der Wellenstumpf 26 in der hohlen Kolbenstange 33 frei drehbar gelagert ist.

Im Betriebszustand des Magazins befindet sich der Hubtisch 17 unter der Krafteinwirkung der Arbeitszylinder 22 in einer oberen Endstellung (Fig. 1, 2 und 6), und der unter Druck stehende Arbeitszylinder 28 drückt den Wellenstumpf 26 mit entgegengesetzter Kraftrichtung gegen das obere Ende 13 der Säule 3. Dabei befindet sich der Zentrierzapfen 21 am Drehschemel 14 im Eingriff mit der Zentriermuffe 12 am unteren Ende der Säule 3 und der Zentrierkonus 13 am oberen Ende der Säule 3 im Eingriff mit der konischen Zentrierbohrung 27 des Wellenstumpfes 26, so dass die Säule 3 zwischen dem Drehschemel 14 und dem Wellenstumpf 26 formschlüssig und positionsgerecht gehalten und der Fussteller 9 mit dem Drehschemel 14 reibschlüssig verbunden ist.

Zum Fixieren des Drehregals 2 in den für die Entnahme der Lagerobjekte durch ein Handhabungsgerät vorgesehenen Winkelstellungen ist in an sich bekannter Weise ein vertikal beweglicher Raststift 34 vorgesehen, welcher mit den Rastlöchern 11 im Fussteller 9 des Drehregals 2 zusammenarbeitet und durch einen mit dem Gestell 1 über einen Tragarm 35 verbundenen Arbeitszylinder 36 betätigbar ist (Fig. 1). Ausserdem befindet sich am Rande des Fusstellers 9 eine elektronische Speichereinrichtung 37, welche unter anderem Daten zur Identifikation des eingesetzten Drehregals enthält, die durch eine am Gestell 1 montierte Leseeinrichtung 38 abgelesen werden können (Fig. 2).

Für den Austausch des Drehregals 2 ist am stationären Teil des Magazins eine Fördereinrichtung 39 mit horizontaler Förderbahn vorgesehen, auf welche das Drehregal 2 absenkbar ist. Es handelt sich dabei um einen auf der Grundplatte 24 angeordneten Rollenförderer, dessen Rollen 40 in planparallelen Stützplatten 41 gelagert und über Ketten 42 durch einen gemeinsamen, nicht dargestellten Antriebsmotor angetrieben werden. Längs der Förderbahn sind am Umfang des Fusstellers 9 wirksame Führungsschienen 43 für die Längsführung des Drehregals 2 vorhanden, welche Führungsschienen 43 an einem Rahmenteil 44 des Gestells 1 befestigt sind (Fig. 1 und 3). Am gleichen Rahmenteil 44 ist auch ein Endanschlag 45 angebracht (Fig. 2 und 3), an welchem der Fussteller 9 anstösst, wenn ein Drehregal 2 auf der Fördereinrichtung 39 in das Gestell 1 eingefahren wird, so dass das Drehregal 2 im Zentrierbereich stillgesetzt wird, damit der Zentrierzapfen 21 in die Zentriermuffe 12 und der Zentrierkonus in die konische Zentrierbohrung 27 einfahren kann.

Die Entnahme eines Drehregals 2 aus dem Magazin geschieht in der Weise, dass zunächst das Drehregal 2 aus der in den Fig. 1 bis 3 dargestellten Betriebslage in die in Fig. 5 dargestellte Transportlage, d.h. auf die die Rollen 40 der Fördereinrichtung 39 abgesenkt wird. Der Hubtisch 17 ist dabei so weit absenkbar, dass der Zentrierzapfen 21 am Drehschemel 14 nach dem Aufsetzen des Fusstellers 9 auf die Rollen 40 mit der Zentriermuffe 12 am unteren Ende der Säule 3 ausser Eingriff kommt. Der Arbeitszylinder 28 bleibt dabei noch unter Druck, so dass die Führungswirkung am oberen Säulenende während der Senkbewegung des Drehregals 2 erhalten bleibt. Danach wird der Wellenstumpf 26 durch Gegendruck im Arbeitszylinder 28 hochgezogen, um den Zentrierkonus 13 am oberen Säulenende mit der Zentrierbohrung 27 im Wellenstumpf 26 ausser Eingriff zu bringen. Damit ist das Drehregal 2 von den unteren und oberen Kupplungsmitteln gelöst, deren Endstellung aus den Fig. 7 und 9 hervorgeht, und lässt sich durch die Fördereinrichtung 39 an der in Fig. 1 dargestellten Frontseite des Gestells 1 aus diesem herausbewegen, sobald auch der Raststift 34 aus dem zuvor belegten Rastloch 11 im Fussteller 9 nach unten zurückgezogen worden ist.

Im einfachsten Fall wird das aus dem Gestell 1 entnommene Drehregal 2 auf einen an das Gestell 1 herangeführten Wagen (Hand- oder Motorwagen) umgeladen, während auf einem weiteren Wagen ein anderes Drehgestell mit Ersatzobjekten an das Gestell 1 herangeführt und mit Hilfe der Fördereinrichtung 39 in das Gestell 1 eingefahren wird. Zweckmässigerweise verfügen solche Wagen über eine rollende Plattform zur Erleichterung des Transfers und über geignete Mittel zum Fixieren des zu transportierenden Drehregals auf der Plattform.

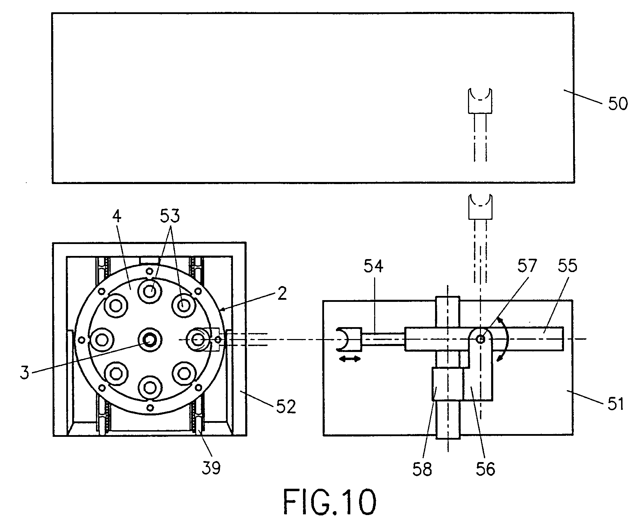

Die Fig. 10 zeigt schematisch als Beispiel für eine einfache Fabrikationsanlage die räumliche Anordnung einer Bearbeitungseinrichtung 50, eines Handhabungsgerätes 51 und eines erfindungsgemässen Magazins 52 mit austauschbarem Drehregal 2 gemäss der in den Fig. 1 bis 9 dargestellten Bauart und darin gelagerten, symbolisch angedeuteten Werkzeugen bzw. Werkstücken 53. Das Handhabungsgerät 51 ist mit drei gesteuerten Achsen ausgerüstet und besitzt einen Greifarm 54, welcher in einem Lagerteil 55 längsverschieblich gelagert ist. Der Lagerteil 55 ist an einem Schlitten 56 um die Achse 57 drehbar gelagert, welcher seinerseits an einer stationären Säule 58 vertikal verschiebbar gelagert ist. Die verschiedenen Bewegungsphasen des Greifarms 54 beim Werkzeug- bzw. Werkstückwechsel sind mit strichpunktierten Linien angedeutet. Die Fig. 10 zeigt deutlich, dass die Hilfseinrichtungen verhältnismässig wenig Stationsraum beanspruchen und das Handhabungsgerät 51 nur geringen Bewegungsraum benötigt. Dieser Vorteil ergibt sich daraus, dass auch für einen länger dauernden Betrieb der Fabri kationsanlage ein einziges Magazin 52 der beschriebenen Art ausreicht und sich somit beim Materialaustausch der Zugriff des Greifarms 54 auf dieses eine Magazin 52 beschränken kann.

## Patentansprüche

1. Magazin für Werkzeuge und/oder Werkstücke, welches mit festem Standort in einer flexiblen Fertigungsanlage für die Zusammenarbeit mit wenigstens einer Bearbeitungseinrichtung und einem dieser zugeordneten Handhabungsgerät für den automatischen Werkzeug- bzw. Werkstückwechsel bestimmt ist und welches ein Drehregal (2) mit mehreren, an einer Säule (3) übereinander angeordneten Lagerebenen aufweist, wobei das Drehregal (2) als separate Baueinheit ausgebildet und austauschbar in den stationären, die Mittel zum Betrieb des Drehregals enthaltenden Teil des Magazins eingesetzt ist, **dadurch gekennzeichnet**, dass der stationäre Teil des Magazins ein Gestell (1) aufweist, an dem lösbare, mit den beiden Enden der drehbaren Säule (3) des Drehregals (2) zusammenarbeitende Kupplungsmittel (14, 21; 26) für die Lagerung und den Antrieb des Drehregals (2) angebracht sind, dass die drehbare Säule (3) des Drehregals (2) an ihrem unteren Ende einen Fussteller (9) mit einer nach unten offenen Zentriermuffe (12) und an ihrem oberen Ende einen Zentrierkonus (13) aufweist, dass sich im unteren Teil des Gestells (1) ein angetriebener, mit einem nach oben gerichteten Zentrierzapfen (21) versehener Drehschemel (14) befindet, auf den das Drehregal (2) aufgesetzt ist, wobei der Fussteller (9) des Drehregals (2) auf dem Drehschemel (14) ruht und dessen Zentrierzapfen (21) in die Zentriermuffe (12) des Fusstellers (9) eingreift, dass an der Oberseite des Gestells (1) ein Wellenstumpf (26) mit einer nach unten offenen konischen Zentrierbohrung (27) für die Aufnahme des Zentrierkonus (13) der Säule (3) frei drehbar gelagert ist, dass der Drehschemel (14) samt Drehantrieb (19, 20) an einem Hubtisch (17) gelagert ist, welcher das eingesetzte Drehregal (2) unter Krafteinwirkung nach oben drückt, so dass dessen Säule (3) zwischen dem Drehschemel (14) und dem Wellenstumpf (26) formschlüssig und positionsgerecht gehalten und der Fussteller (9) mit dem Drehschemel (14) reibschlüssig verbunden ist, und dass am stationären Teil des Magazins eine Fördereinrichtung (39) mit horizontaler Förderbahn für den Austausch des Drehregals (2) vorgesehen ist, wobei das Drehregal (2) aus der Betriebslage mit dem Fussteller (9) auf die Förderbahn absenkbar ist und die Kupplungsmittel (14, 21; 26) beim Lösen vom Drehregal (2) dieses für eine Bewegung in Förderrichtung freigeben.

2. Magazin nach Anspruch 1, **dadurch gekennzeichnet**, dass der Hubtisch (17) aus der Betriebslage so weit absenkbar ist, dass der Zentrierzapfen (21) am Drehschemel (14) nach dem Aufsetzen des Drehregals (2) auf die Fördereinrichtung (39) mit der Zentriermuffe (12) am unteren Säulenende ausser Eingriff kommt, und dass der Wellenstumpf (26) nach oben wegziehbar ist, um den Zentrierkonus (13) am oberen Säulenende mit der Zentrierbohrung (27) am Wellenstumpf (26) ausser Eingriff zu bringen, so dass die Lösung des Drehregals (2) von den Kupplungsmitteln (14, 21; 26) in zwei Phasen erfolgen kann, wobei in der ersten Phase das Drehregal (2) unter Fortwirkung der oberen Kupplungsmittel (26) mit seinem Fussteller (9) auf die Fördereinrichtung (39) aufgesetzt wird und die unteren Kupplungsmittel (14, 21) gelöst werden und in der anschliessenden zweiten Phase die oberen Kupplungsmittel (26) vom Drehregal (2) gelöst werden.

3. Magazin nach Anspruch 1, **dadurch gekennzeichnet**, dass längs der Förderbahn am Umfang des Fusstellers (9) wirksame Führungsorgane (43) für die Längsführung des Drehregals (2) vorhanden sind.

4. Magazin nach Anspruch 1, **dadurch gekennzeichnet**, dass die Förderbahn einen Endanschlag (45) aufweist, welcher das auflaufende Drehregal (2) im jeweiligen Zentriebereich stillsetzt.

5. Magazin nach einem der vorhergehenden Ansprüche, **dadurch gekennzeichnet**, dass als Fördereinrichtung (39) ein Rollenförderer mit gemeinsam angetriebenen Rollen (40) vorgesehen ist.

## Claims

1. Magazine for tools and/or work-pieces, which with a fixed location in a flexible manufacturing plant is intended for cooperation with at least one processing device and a handling appliance associated therewith for the automatic exchange of tools or work-pieces and which comprises rotating shelving (2) with a plurality of storage tiers arranged one above the other on a column (3), the rotating shelving (2) being constructed as a separate component and being inserted in an exchangeable manner in the stationary part of the magazine containing the means for operating the rotating shelving, characterised in that the stationary part of the magazine comprises a frame (1), on which are located releasable coupling means (14, 21; 26) cooperating with the two ends of the rotary column (3) of the rotating shelving (2), for the mounting and drive of the rotating shelving (2), that the rotary column (3) of the rotating shelving (2) comprises at its lower end a base plate (9) with a centering collar (12) open on the under side and at its upper end a centering cone (13), that located in the lower part of the frame (1) is a driven swivelling bolster (14) provided with an upwardly directed centering journal (21), on which swivelling bolster the rotating shelving (2) is fitted, the base plate (9) of the rotating shelving (2) resting on the swivelling bolster (14) and its centering journal (21) engaging in the centering collar (12) of the base plate (9), that mounted to rotate freely on the upper side of the frame (1) is a shaft butt (26) with a downwardly open conical centering bore (27) for receiving the centering cone (13) of the column (3), that the swivelling bolster (14) together with the rotary drive (19, 20) is mounted on a lift table (17), which pushes the inserted rotating shelving (2) upwards under the action of force, so that its column (3) is retained in a form-locking manner and in the correct position between the swivelling bolster (14) and the shaft butt (26) and the base plate (9) is connected by frictional resistance to the swivelling bolster (14) and that provided on the stationary part of the magazine is a conveying device (39) with a horizontal conveying path for the exchange of the rotating shelving (2), the rotating shelving (2) being able to be lowered from the operating position with the base plate (9) onto the conveying path and at the time of release from the rotary shelving (2), the coupling means (14, 21; 26) releasing the latter for a movement in the conveying direction.

2. Magazine according to Claim 1, characterised in that the lifting table (17) can be lowered out of the operating position so far that the centering journal (21) on the swivelling bolster (14) comes out of engagement with the centering collar (12) at the lower end of the column after placing the rotating shelving (2) on the conveying device (39) and that the shaft butt (26) can be withdrawn upwards in order to bring the centering cone (13) at the upper end of the column out of engagement with the centering bore (27) on the shaft butt (26), so that the release of the rotating shelving (2) from the coupling means (14, 21; 26) can take place in two phases, in the first phase, the rotating shelving (2) being placed by its base plate (9) on the conveying device (39) under the continuing action of the upper coupling means (26) and the lower coupling means (14, 21) being released and in the subsequent second phase the upper coupling means (26) being released from the rotating shelving (2).

3. Magazine according to Claim 1, characterised in that guide members (43) for the longitudinal guidance of the rotating shelving (2) are provided along the conveying path and which guide members act on the periphery of the base plate (9).

4. Magazine according to Claim 1, characterised in that the conveying path comprises an end stop (45), which stops the approaching rotating shelving (2) in the respective centering region.

5. Magazine according to one of the preceding Claims, characterised in that provided as the conveying device (39) is a roller conveyor with jointly driven rollers (40).

## Revendications

1. Magasin pour outils et/ou pièces à travailler, lequel, logé de façon fixe dans une installation de production flexible, est destiné à travailler de concert avec au moins un dispositif d'usinage et un manipulateur affecté à ce dispositif pour le remplacement automatique des outils/pièces à travailler, et présente un rayonnage tournant (2) avec plusieurs niveaux de stockage superposés sur une colonne (3), le rayonnage tournant (2) étant conçu comme une unité modulaire séparée et étant inséré de façon à pouvoir être remplacé dans la partie fixe du magasin contenant des organes pour faire fonctionner le rayonnage tournant, caractérisé en ce que la partie fixe du rayonnage présente un bâti (1), sur lequel sont disposés des éléments d'accouplement (14, 21; 26) amovibles qui travaillent avec les deux extrémités de la colonne tournante (3) du rayonnage tournant (2) et sont destinés au logement et à l'entraînement du rayonnage (2), en ce que la colonne tournante (3) du rayonnage (2) présente un pied plateau (9) avec un manchon de centrage (12) ouvert vers le bas à son extrémité inférieure et un cône de centrage (13) à son extrémité supérieure, en ce que dans la partie inférieure du bâti (1) se trouve un escabeau tournant (14) entraîné et pourvu d'un boulon de centrage (21) dirigé vers le haut, escabeau sur lequel est posé le rayonnage tournant (2), le pied plateau (9) du rayonnage tournant (2) reposant sur l' escabeau (14) et son boulon de centrage (21) venant s'engrener dans le boulon de centrage (12) du pied plateau (9), en ce qu'à la surface du bâti (1) est monté de façon à pouvoir tourner librement un bout d'arbre (26) avec un trou de centrage (27) conique ouvert vers le bas pour le logement du cône de centrage (13) de la colonne, en ce que l'escabeau tournant (14) est placé avec le moteur de rotation (19, 20) sur une table élévatrice (17), laquelle appuie vers le haut le rayonnage tournant (2) inséré sous l'effet de la force, de sorte que sa colonne (3) est tenue entre l'escabeau tournant (14) et le bout d'arbre (26) du fait de la liaison mécanique par conjugaison de forme et dans la bonne position et le pied plateau (9) est relié à l'escabeau tournant (14) sous l'effet de l'entraînement par friction, et en ce que sur la partie fixe du magasin est prévu un dispositif de transport (39) avec glissière horizontale pour le remplacement du rayonnage (2), le rayonnage tournant (2) pouvant être abaissé de la position de service avec le pied plateau (9) sur la glissière de transport et les élément d'accouplement (14, 21; 26) libérant le rayonnage lors de son détachement pour un mouvement dans le sens du transport.

2. Magasin selon le revendication 1, caractérisé en ce que la table élévatrice (17) peut être suffisamment abaissée de la position de service pour que le boulon de centrage (21) sur l'escabeau tournant (14) ne soit plus en prise avec le manchon de centrage (12) sur l'extrémité inférieure de la colonne après avoir posé le rayonnage (2) sur le dispositif de transport (39), et en ce que le bout d'arbre (26) peut être suffisamment tiré vers le haut pour désengrener le cône de centrage (13) sur l'extrémité supérieure de la colonne avec le trou de centrage (27) sur le bout d'arbre (26), de sorte que le détachement du rayonnage (2) des éléments d'accouplement (14, 21; 26) peut se faire en deux phases, le rayonnage tournant (2) étant posé avec son pied plateau (9) sur le dispositif de transport (39) sous l'effet progressif des éléments d'accouplement supérieurs (26) et les éléments d'accouplement inférieurs (14, 21) étant détachés lors de la première phase et les éléments d' accouplement supérieurs (26) étant détachés du rayonnage (2) lors de la deuxième phase consécutive.

3. Magasin selon la revendication 1, caractérisé en ce que le long de la glissière de transport, à la périphérie du pied plateau (9), il y a des organes de guidage actifs (43) pour le guidage longitudinal du rayonnage tournant (2).

4. Magasin selon la revendication 1, caractérisé en ce que la glissière de transport présente une butée finale (45), laquelle arrête le rayonnage tournant (2) arrivant dans la zone de centrage concernée.

5. Magasin selon l'une des revendications précédentes, caractérisé en ce qu'on prévoit comme dispositif de transport (39 un transporteur à rouleaux avec des rouleaux (40) entraînés ensemble.
